# EUROPEAN PATENT SPECIFICATION

(11) **EP 2 311 884 B1**
(45) Date of publication and mention of the grant of the patent: **06.07.2016**
(21) Application number: 10187664.7
(22) Date of filing: 15.10.2010
(51) Int. Cl.: C08B 31/18

(54) **Process for the production of cationic starch**
Verfahren zur Herstellung von kationischer Stärke
Procédé de production d'amidon cationique

(30) Priority: 16.10.2009 IT MI20091780
(43) Date of publication of application: 20.04.2011
(73) Proprietor: Vommchemipharma S.R.L., 20089 Rozzano (MI) (IT)
(72) Inventor: Cerea, Giuseppina, 20089, Rozzano (MI) (IT)
(74) Representative: Ferreccio, Rinaldo

(56) References cited:
- EP-A1- 0 796 832
- US-A- 3 346 558
- US-A- 3 346 563

## Description

### Field of application

The present invention regards a process for the production of cationic starch, a product that is especially used in the papermaking industry.

### Prior art

It is known that starch cationization is an indispensible process for improving the application of starch onto mainly electronegative supports, in particular onto cellulose supports with the aim of improving some mechanical properties of such supports such as flexibility and sealing.

For example, in the papermaking industry, cationic starch is widely used as a coating agent to increase the resistance and the rigidity of the paper fibres. Furthermore, cationic starch, due to its inherent cationic charge, considerably improves the retention of the inorganic pigments and starch by the cellulose paste, without any loss in terms of resistance.

Cationic starch is also used in other industries as a flocculating agent for colloidal solutions.

In the prior art, starch cationization is obtained with the help of halohydrins of quaternary ammonium salts, as described for example in US Patent No. 3 346 563. The processes most commonly used for starch cationization provide for the pre-treatment of starch with about 3% of 50% NaOH and the subsequent addition of 5% of (3- chloro-2-hydroxypropyl)trimethylammonium chloride. The following compounds may be used alternatively to such compound: (2,3-dihydroxypropyl)trimethylammonium chloride, 1-chloro-2,3-epoxypropane, (3-hydroxy-1,2-propyl)trimethylammonium chloride and 2,3-epoxypropyltrimethylammonium chloride.

The reaction between NaOH-pre-treated starch and (3-chloro-2-hydroxypropyl)trimethylammonium chloride is strongly exothermic and the NaOH and the quaternary ammonium should be prevented from reacting with each other outside the starchy support.

At the end of the reaction, starch should be dried and neutralized using hydrochloric acid, so as to cause the protonization of the tertiary amine and form the cationic group.

This process reveals various drawbacks, among which a definitely long reaction time (up to a few days) and the possible, unwanted, gelling of starch due to the presence of NaOH. Furthermore, should the exothermicity of the reaction not be controlled suitably, there may occur a phenomenon of epoxidation of the reagent, with loss of hydrochloric acid and ensuing loss of the quaternization properties.

However, the most serious drawback of the known starch cationization process lies in the hazardousness of the reagents used, which was officially acknowledged by the European Community Commission through the May 30^{th} 2008 Recommendation. With particular reference to (3-chloro-2-hydroxypropyl)trimethylammonium chloride and 2,3-epoxypropyltrimethylammonium chloride it was actually established that such substances expose the operators using them and the people indirectly exposed thereto through the environment to mutagenicity, carcinogenicity and sensitization risks.

In the light of the abovementioned drawbacks, the problem underlying the present invention is that of providing a process for the starch cationization requiring lower reaction times, which does not give rise to starch gelling phenomena or loss of quaternization properties and which, above all, is free of the risks for the health of the operators remarkedwith reference to the reagents used currently.

### Summary of the invention

Such a problem was solved, according to the present invention, by a process for starch cationization comprising the steps of:
providing a powdered starch having a moisture content not higher than 5% by weight of the total weight of the starch;
reacting said starch with boron trifluoride (BF₃) at a temperature comprised between 5°C and 100°C with a weight ratio between boron trifluoride and starch of 0.01 to 1.0.

Preferably, the temperature is comprised between 40 and 60°C and said weight ratio is preferably comprised between 0.1 and 0.3.

BF₃ may be used as a gas but it may also be used in form of adducts with ethers and organic sulfides, for example with ethyl ether (BF₃·OEt₂) or dimethyl sulfide (BF₃·SMe₂). Gaseous BF₃ is preferred.

Preferably the moisture content of the powdered starch is lower or equal to 3%, advantageously lower or equal to 1%, by weight of the total weight of the starch. In order to obtain a starch with the moisture content required by the process according to the present invention it is sufficient to subject a starch currently available on the market (having a moisture content of about 13%) to drying according to known methods.

The reaction time varies depending on the degree of cationization intended to be obtained and it is generally comprised between 30 seconds and 60 minutes.

The process according to the invention allows the cationization of various types of starch of natural origin such as wheat, maize, rice, potato starch etc, or even fractions, mixtures or derivatives thereof.

The reaction is preferably carried out inside reactors which allow providing a close contact between the powdered starch and the gaseous BF₃. Examples of reactors suitable for this purpose are fluid bed reactors.

A reactor particularly suitable for carrying out the starch cationization reaction by means of BF₃ is made up of an apparatus called turbo-reactor, comprising a cylindrical tubular body with horizontal axis, provided with at least one opening for the admission of reagents and at least one opening for the outlet of the final product, a possible heating or cooling jacket for bringing the temperature of said tubular body to a predetermined temperature, a bladed rotor, rotatably supported in the cylindrical tubular body.

When using such apparatus, the starch cationization process according to the present invention comprises the steps of:
- feeding a continuous stream of powdered starch with a moisture content not higher than 5% into the abovementioned turbo-reactor, in which the bladed rotor is rotated at a speed greater or equal to 150 rpm, so as to disperse said continuous stream of starch into a stream of starch particles,
- feeding into said turbo-reactor, together with said stream of starch, at least one continuous stream of gaseous BF₃,
- centrifuging said starch particles and the BF₃ against the internal walls of the turbo-reactor, forming a thin, tubular, fluid, dynamic, highly turbulent layer, in which the starch particles and the BF₃ are kept mechanically in close contact by the blades of said bladed rotor,
- reacting starch and BF₃ in said thin layer while it advances substantially in contact with the internal wall of the turbo-reactor towards the outlet opening.

The flow of gaseous BF3 is preferably fed with the same direction of flow as the stream of starch.

The rotation speed of the bladed rotor is preferably comprised between 150 and 1500 rpm, advantageously between 150 and 500 rpm.

The residence time of the starch inside the turbo-reactor is generally comprised between 30 seconds and 20 minutes, depending on the degree of cationization intended to be obtained, which increases proportionally with respect to the period of time.

The preferred values of temperature and weight ratio between BF₃ and starch are those provided above.

The product exiting from the outlet opening of the turbo-reactor may be fed through a rotary valve to a container provided with a worm conveyor and at the outlet of the latter, the solid phase, made up of the cationic starch, is separated from the gaseous phase, which may be conveyed to a purification apparatus, such as for example a scrubber, for neutralizing possible traces of unreacted BF₃.

The cationic starch obtained through the process according to the present invention is advantageously suitable for all purposes provided for the known cationic starches, which have quaternary ammonium groups on the molecules thereof, though not having such groups. According to a non-binding hypothesis, it is deemed that the cationization reaction according to the present invention leads to the formation of oxonium ions (-OH₂⁺) on the alcoholic hydroxy groupsof the glucose units.

### Brief description of the drawings

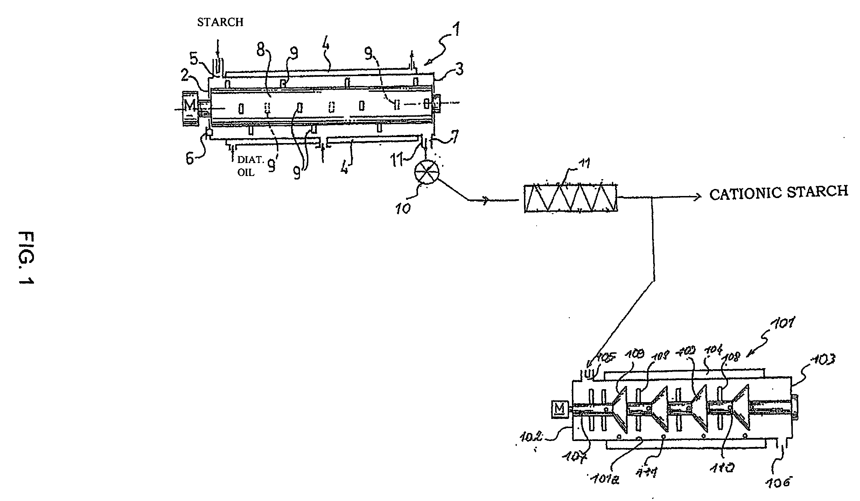

Advantages and characteristics of this invention shall become clearer from the description that follows of an embodiment of the starch cationization process, provided herein with reference to an apparatus schematically represented in figure 1 of the attached drawing, purely provided by way of example.

### Detailed description

Referring to the abovementioned figure, an apparatus used for the process of starch cationization according to the present invention comprises a turbo-reactor essentially made up of a cylindrical tubular body 1, closed at the opposite ends by bases 2, 3 and coaxially provided with a heating (or cooling) jacket 4 through which a fluid, for example diathermic oil, is to flow, to keep the internal wall of the body 1 at a predetermined temperature.

The tubular body 1 is provided with openings 5, 6 for the inlet of starch to be cationized and respectively of BF₃, as well as an opening 7 for the discharge of cationized starch.

Rotatably supported in the tubular body 1 is a bladed rotor 8, the blades 9 of which are arranged helically and are oriented for centrifuging and simultaneously conveying towards the outlet the reagents (starch and BF₃) and respectively the products of the reaction (cationized starch).

A motor M is provided to operate the bladed rotor 8 at a speed variable between 150 and 1500 rpm.

The discharge opening 7 of the turbo-reactor is provided with a rotary valve 10 which discharges the obtained cationic starch into a container 11, provided with an evacuation worm conveyor. The container 11 is connected in slight depression to a scrubber, in which the possible unreacted BF₃ present in the gaseous phase exiting from the turbo-reactor is neutralized by washing with an alkaline solution for example a NaOH solution.

In the example described herein, the scrubber is made up of a turbo-scrubber, comprising a tubular body 101, having an internal cylindrical wall 101a, with an axis arranged horizontally and closed at the opposite ends thereof by bases 102, 103, and coaxially provided with a cooling jacket 104, through which water or any other cooling fluid is to flow to keep the internal wall of the tubular body 101 at a predetermined temperature.

The tubular body 101 is provided with an inlet opening 105 for the gas to be subjected to purification and an outlet opening 106. Rotatably supported in the tubular body 101 is a hollow shaft 107 provided with blades 108 arranged helically and oriented so as to centrifuge and convey the gas subjected to treatment towards the outlet opening 106. Furthermore, fixed on the shaft 107 are cones 109, the base of which is directed towards the outlet opening and has a diameter almost identical to the diameter of the tubular body 101.

At the vertex of each cone 109, the shaft 107 has an opening 110 for the admission of a liquid and the internal wall of the tubular body 101 has openings 111 for the spray admission of a liquid.

The turbo-scrubber in question is further described in patent EP 0 796 832 B1.

Using such turbo-scrubber, the substantially gaseous flow coming from the container 11 is purified of possible traces of unreacted BF₃ by washing with an aqueous solution of NaOH fed into the tubular body 101 through the abovementioned openings 110 and 111.

### EXAMPLE

A stream of powder maize starch, previously dried so as to bring its moisture content to about 1% was fed continuously, through the opening 5, with a flow rate of 120 Kg/h, into the turbo-reactor 1, in which the bladed rotor 8 was rotated at a speed of 300 rpm and in which the internal wall was kept at a controlled temperature of about 50°C. , A continuous flow of gaseous boron trifluoride was simultaneously fed through the opening 6 with a flow rate of 1.2 kg/h.

After an average residence time of about 5 minutes residence in the turbo-reactor, a flow of cationized starch was continuously discharged into the container 11 through the opening 7 and the rotary valve 10. The gas separated from the cationized starch powder exiting from the container 11 was fed into the tubular body 101 of the turbo-scrubber through the opening 105 and it was herein subjected to washing with an aqueous solution of 10% NaOH to neutralize the possible traces of unreacted BF₃.

The cationic starch thus obtained revealed high fixing properties on various electronegative supports, in particular on cellulose supports.

## Claims

1. A process for starch cationization, comprising the steps of:
providing a powdered starch, having a moisture content not higher than 5% by weight of the total weight of the starch,
reacting said starch with boron trifluoride (BF₃) at a temperature comprised between 5°C and 100°C, with a weight ratio between boron trifluoride and starch of 0.01 to 1.0.

2. The process of claim 1 wherein said temperature is comprised between 40 and 60°C and said weight ratio between boron trifluoride and starch is 0.1 to 0.3.

3. The process of claim 1 or 2, wherein BF₃ is used as a gas or as an adduct with ethers or organic sulfides.

4. The process of any one of claims 1 and 2, wherein BF₃ is used as a gas.

5. The process of any one of the preceding claims, wherein the reaction time is between 30 seconds and 60 minutes.

6. The process of any one of claims 1, 2 and 4, wherein said step of reacting said starch with boron trifluoride (BF₃) is carried out by:
- feeding a continuous stream of said powdered starch into a turbo-reactor including a cylindrical tubular body (1), provided with at least one opening (5, 6), for the admission of said starch and of said boron trifluoride, and at least one outlet opening (7) for the outlet of the final product, and possibly a heating or cooling jacket (4) for bringing the internal wall of said tubular body (1) to a predetermined temperature, a bladed rotor (8) supported for rotation in the cylindrical, tubular body, in which it is rotated at centrifugation speed, so as to disperse the continuous stream of starch into a stream of starch particles,
- feeding into said turbo-reactor, together with said starch stream, a continuous stream of gaseous BF₃,
- centrifuging said starch particles and said gaseous BF₃ against the internal wall of the turbo-reactor forming a thin, tubular, dynamic, highly turbulent, fluid layer in which the starch particles and the gaseous BF₃ are kept mechanically in intimate contact by the blades (9) of the bladed rotor (8), and reacting the starch and the gaseous BF₃ in the thin layer whilst it advances substantially in contact with the internal wall towards the outlet opening (7) of the turbo-reactor.

7. The process of claim 6, wherein said stream of gaseous BF₃ is fed into said turbo-reactor with the same direction of flow of said starch stream.

8. The process of claim 6 or 7, wherein the rotation speed of said bladed rotor (8) is between 150 and 1500 rpm, preferably between 150 and 500 rpm.

9. The process of any one of claims 6 to 8, wherein the residence time of said starch inside the turbo-reactor is between 30 seconds and 20 minutes.

10. The process of any one of claims 6 to 9, wherein a continuous stream of cationic starch and a continuous stream of residual gaseous phase are discharged from said outlet opening (7) of said turbo-reactor and the stream of residual gaseous phase is fed to a scrubber (101) to neutralize unreacted BF₃ that may possibly be present in said gaseous phase.

## Patentansprüche

1. Verfahren zur Kationisierung von Stärke, das folgende Schritte aufweist:
Bereitstellen einer pulverförmigen Stärke mit einem Feuchtigkeitsgehalt nicht höher als 5 Gewichts-% des Gesamtgewichts der Stärke,
Reagieren der Stärke mit Bortrifluorid (BF₃) bei einer Temperatur zwischen 5 °C und 100 °C und mit einem Gewichtsverhältnis zwischen Bortrifluorid und Stärke von 0,001 bis 1,0.

2. Verfahren nach Anspruch 1,
wobei die Temperatur zwischen 40 und 60 °C liegt und das Gewichtsverhältnis zwischen Bortrifluorid und Stärke 0,1 bis 0,3 beträgt.

3. Verfahren nach Anspruch 1 oder 2,
wobei BF₃ als Gas oder als Addukt mit Ethern oder organischen Sulfiden verwendet wird.

4. Verfahren nach einem der Ansprüche 1 und 2,
wobei BF₃ als Gas verwendet wird.

5. Verfahren nach einem der vorhergehenden Ansprüche,
wobei die Reaktionszeit zwischen 30 Sekunden und 60 Minuten beträgt.

6. Verfahren nach einem der Ansprüche 1, 2 und 4, wobei der Schritt des Reagierens der Stärke mit Bortrifluorid (BF₃) ausgeführt wird durch:
- Zuführen eines kontinuierlichen Stroms der pulverförmigen Stärke in einen Turboreaktor mit einem zylindrischen rohrförmigen Körper (1), mit mindestens einer Öffnung (5, 6) für die Aufnahme der Stärke und des Bortrifluorids und mit mindestens einer Austrittsöffnung (7) für den Austritt des Endprodukts und gegebenenfalls mit einem Heiz- oder Kühlmantel (4), um die Innenwand des rohrförmigen Körpers (1) auf eine vorbestimmte Temperatur zu bringen, sowie mit einem Schaufel-Rotor (8), der in dem zylindrischen, rohrförmigen Körper drehbar gelagert ist, in dem er mit Zentrifugationsgeschwindigkeit gedreht wird, um den kontinuierlichen Strom von Stärke in einen Strom von Stärkepartikeln zu dispergieren,
- Einspeisen eines kontinuierlichen Stroms von gasförmigem BF₃ in den Turboreaktor zusammen mit der Stärkestrom,
- Zentrifugieren der Stärkepartikel und des gasförmigen BF₃ gegen die Innenwand des Turboreaktors unter Bilden einer dünnen, rohrförmigen, dynamischen, hoch turbulenten Fluidschicht, in der die Stärkepartikel und das gasförmige BF₃ durch die Schaufeln (9) des Schaufel-Rotors (8) mechanisch in innigem Kontakt gehalten bleiben, und Reagieren der Stärke und des gasförmigen BF₃ in der dünnen Schicht, während sich diese im Wesentlichen in Kontakt mit der Innenwand in Richtung auf die Austrittsöffnung (7) des Turboreaktors voranbewegt.

7. Verfahren nach Anspruch 6,
wobei der Strom von gasförmigem BF₃ dem Turboreaktor mit der gleichen Fließrichtung des Stärkestroms zugeführt wird.

8. Verfahren nach Anspruch 6 oder 7,
wobei die Rotationsgeschwindigkeit des Schaufel-Rotors (8) zwischen 150 und 1500 min⁻¹, vorzugsweise zwischen 150 und 500 min⁻¹, liegt.

9. Verfahren nach einem der Ansprüche 6 bis 8,
wobei die Verweilzeit der Stärke im Inneren des Turboreaktors zwischen 30 Sekunden und 20 Minuten beträgt.

10. Verfahren nach einem der Ansprüche 6 bis 9,
wobei ein kontinuierlicher Strom von kationischer Stärke und ein kontinuierlicher Strom von Restgasphase von der Austrittsöffnung (7) des Turboreaktors abgegeben werden und der Strom der Restgasphase einem Wäscher (101) zugeführt wird, um nicht reagiertes BF₃ zu neutralisieren, das möglicherweise in der Gasphase vorhanden ist.

## Revendications

1. Procédé pour la cationisation de l'amidon, comprenant des étapes de :
approvisionnement en amidon en poudre, ayant une teneur en humidité pas plus haute que 5% en poids de la masse totale de l'amidon,
réaction dudit amidon avec du trifluorure de bore (BF₃) à une température comprise entre 5°C et 100°C, avec un rapport massique entre le trifluorure de bore et l'amidon de 0,01 à 1,0.

2. Procédé selon la revendication 1 dans lequel ladite température est comprise entre 40 et 60°C et ledit rapport massique entre le trifluorure de bore et l'amidon est 0,1 à 0,3.

3. Procédé selon la revendication 1 ou 2, dans lequel le BF₃ est utilisé sous forme de gaz ou sous forme de produit d'addition avec des éthers ou des sulfures organiques.

4. Procédé selon l'une des revendications 1 et 2, dans lequel le BF₃ est utilisé sous forme de gaz.

5. Procédé selon l'une des précédentes revendications, dans lequel le temps de la réaction est entre 30 secondes et 60 minutes.

6. Procédé selon l'une des revendications 1, 2 et 4, dans lequel ladite étape de réaction dudit amidon avec le trifluorure de bore (BF₃) est réalisée par :
- l'introduction d'un flux continu dudit amidon en poudre dans un turbo-réacteur comportant un corps tubulaire (1) cylindrique, pourvu d'au moins une ouverture (5, 6), pour l'admission dudit amidon et dudit trifluorure de bore, et au moins un orifice de sortie (7) pour la sortie du produit final, et éventuellement une enveloppe (4) refroidissante ou chauffante pour amener la paroi interne dudit corps tubulaire (1) à une température prédéterminée, un rotor à lames (8) supporté de façon à tourner dans le corps tubulaire, cylindrique, dans lequel il tourne à une vitesse de centrifugation, de façon à disperser le flux continu d'amidon en un flux de particules d'amidon,
- l'introduction à l'intérieur dudit turbo-réacteur, avec ledit flux d'amidon, d'un flux continu de BF₃ gazeux,
- la centrifugation desdites particules d'amidon et dudit BF₃ gazeux contre la paroi interne du turbo-réacteur pour former une couche fluide, hautement turbulente, dynamique, tubulaire, mince, dans laquelle les particules d'amidon et le BF₃ gazeux sont mécaniquement maintenus en contact intime par les lames (9) du rotor à lames (8), et faire réagir l'amidon et le BF₃ gazeux dans la mince couche pendant qu'elle avance sensiblement en contact avec la paroi intérieure en direction de l'orifice de sortie (7) du turbo-réacteur.

7. Procédé selon la revendication 6, dans lequel ledit flux de BF₃ gazeux est introduit dans ledit turbo-réacteur avec le même sens d'écoulement que ledit flux d'amidon.

8. Procédé selon la revendication 6 ou 7, dans lequel la vitesse de rotation dudit rotor à lames (8) est entre 150 et 1500 rpm, de préférence entre 150 et 500 rpm.

9. Procédé selon l'une des revendications 6 à 8, dans lequel le temps de séjour dudit amidon à l'intérieur du turbo-réacteur est entre 30 secondes et 20 minutes.

10. Procédé selon l'une des revendications 6 à 9, dans lequel un flux continu d'amidon cationique et un flux continu de phase gazeuse résiduelle sont évacués par ledit orifice de sortie (7) dudit turbo-réacteur et le flux de la phase gazeuse résiduelle est introduit dans un épurateur (101) pour neutraliser le BF₃ qui n'a pas réagi qui peut éventuellement être présent dans ladite phase gazeuse.
